# EUROPÄISCHE PATENTSCHRIFT

(11) **EP 3 094 793 B1**
(45) Veröffentlichungstag und Bekanntmachung des Hinweises auf die Patenterteilung: **14.03.2018**
(21) Anmeldenummer: 15701689.0
(22) Anmeldetag: 12.01.2015
(51) Int. Cl.: E04G 21/04, B66C 23/62, B66C 23/88

(54) **AUTOBETONPUMPE**
TRUCK-MOUNTED CONCRETE PUMP
POMPE À BÉTON AUTOMOTRICE

(30) Priorität: 13.01.2014 DE 102014200396
(43) Veröffentlichungstag der Anmeldung: 23.11.2016
(73) Patentinhaber: Putzmeister Engineering GmbH, 72631 Aichtal (DE)
(72) Erfinder: WESTERMANN, Karl, 72574 Bad Urach (DE); KASTEN, Knut, 73760 Ostfildern (DE)
(74) Vertreter: Pfiz, Thomas
(86) Internationale Anmeldenummer: PCT/EP2015/050397
(87) Internationale Veröffentlichungsnummer: WO 2015/104410

(56) Entgegenhaltungen:
- CN-U- 202 493 871
- DE-A1-102004 007 509
- JP-A- H09 323 899

## Beschreibung

Die Erfindung betrifft eine Autobetonpumpe mit einem Fahrzeug und einem darauf angeordneten Betonverteilermast, welcher mehrere als Armpaket auf einer fahrzeugfesten Mastauflageeinheit ablegbare Mastarme besitzt, und einer zum Ablegen und Entfalten des Armpakets ausgebildeten Masthydraulik, welche einen das Armpaket in einer Ablagebewegung gegen die Mastauflageeinheit bewegenden ersten Hydraulikzylinder aufweist. Die DE 10 2004 007 509 A1 offenbart eine solche Autobetonpumpe gemäß dem Oberbegriff des Anspruchs 1.

Bei solchen mobilen Betonpumpen wird der die Betonförderleitung führende Verteilermast zum Transport eingefaltet und an einem von dem Drehgelenk für den ersten Mastarm beabstandeten Abschnitt auf der Mastauflageeinheit bzw. einem Mastbock abgelegt, so dass Querbewegungen im Fahrzustand bzw. Mastbewegungen beim Fahren auf z.B. unebener Strecke möglichst vermieden werden. Dabei kann das Armpaket unter Einsatz der Hydraulik so stark nach unten gedrückt werden, dass zwar bei der Straßenfahrt eine verbesserte Fixierung durch Verspannen des Armpakets gegen den Unterbau erreicht wird, bei Fehlbedienung jedoch eine nicht gewollte plastische Verformung des Unterbaus bzw. Beschädigung des Fahrgestells auftritt. Im Stand der Technik, wie zum Beispiel aus der JP H09 323899 A, sind ebenfalls Mittel zum Schutz vor Selbstbeschädigungen eines Fahrzeuges durch einen Ausleger bekannt.

Ausgehend hiervon liegt der Erfindung die Aufgabe zugrunde, die im Stand der Technik bekannten Autobetonpumpen weiter zu verbessern und mit möglichst einfachen Mitteln einen Schutz vor Selbstbeschädigung zu gewährleisten.
Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, in den Lastpfad für das Armpaket im Fahrzustand ein kraftsensorisches Element zu integrieren. Dementsprechend wird erfindungsgemäß eine mit dem den Mast antreibenden Hydraulikzylinder gekoppelte und die Ablagebewegung vorzugsweise selbsttätig beendende Schutzschaltung vorgeschlagen, welche eine unter der Last des Armpakets betätigbare, d.h. die Last des Armpakets aufnehmende und bei Erreichen einer Grenzlast auslösende Schalt- bzw. Sensoreinheit umfasst. Die (vertikale) Last des Mastes (Eigengewicht) wird also über die Mastauflageeinheit in das Fahrzeug eingeleitet, wobei die Sensoreinheit dergestalt zwischen Armpaket und Mastauflageeinheit angebracht ist, dass sie die gesamte Last des Armpakets ohne Bypass trägt. Auf diese Weise ist es möglich, die Auflagekraft in einem zulässigen Bereich zu begrenzen, ohne dass eine Umrechnung von Messgrößen erforderlich wäre. Auch eine Nachrüstung bestehender Maschinenvarianten ist damit problemlos möglich. Eine Verstärkung der Unterkonstruktion als Gegenmaßnahme gegen Beschädigungen erübrigt sich dadurch, so dass auch das Fahrgewicht nicht zusätzlich erhöht wird. Erfindungsgemäß weist die Schalteinheit ein an der Mastauflageeinheit angeordnetes, beim Ablegen des Armpakets elastisch verformbares Lastaufnahmeelement auf. Auf diese Weise kann die Krafterfassung durch eine einfache Deformationsmessung erfolgen, wobei die Deformation zugleich eine mechanische Auslösung bei Erreichen eines gegebenen Verformungszustands ermöglicht. Erfindungsgemäß ist weiter vorgesehen, dass das Armpaket nur über das Lastaufnahmeelement auf der Mastauflageeinheit abgestützt ist, so dass der Lastpfad eindeutig definiert ist.

Um die auftretenden Lasten abtragen zu können, ist es vorteilhaft, wenn das Lastaufnahmeelement zur elastischen Aufnahme einer Kraft von mindestens 1 kN, vorzugsweise mehr als 10 kN ausgelegt ist.

Eine konstruktiv vorteilhafte, kompakt realisierbare Ausführung sieht vor, dass das Lastaufnahmeelement eine durch das Armpaket komprimierbare Federanordnung, insbesondere ein Tellerfederpaket aufweist.

Für eine automatische Schutzwirkung ist es vorteilhaft, wenn die Schalteinheit einen am Ende der Ablagebewegung auslösenden Endschalter aufweist wobei der Endschalter die Ablagebewegung selbsttätig beendet. Durch einen solchen Schaltvorgang kann die Hydraulik auf einfache Weise automatisch außer Kraft gesetzt werden.

Hierbei ist es auch von Vorteil, wenn die Schutzschaltung ein mit dem Hydraulikzylinder verbundenes hydraulisches Stellglied, insbesondere ein Wegeventil aufweist.

Eine reaktionsschnelle Abschaltung lässt sich dadurch realisieren, dass der Endschalter einen Steueranschluss des Wegeventils von einer Bedieneinrichtung trennt.

In einer vorteilhaften Ausführung ist der Hydraulikzylinder insbesondere stangenseitig an einem ersten Mastarm des Armpakets angelenkt, wobei die Schutzschaltung zum Beenden der Ablagebewegung die insbesondere stangenseitige Druckölversorgung des Hydraulikzylinders unterbricht.

Eine weitere Verbesserung der Bedienungsfreundlichkeit sieht vor, dass beim Ansprechen der Schutzschaltung ein Signal für einen Bediener des Betonverteilermasts abgegeben wird. Kein Gegenstand der Erfindung ist eine Schutzschaltung als Einbausystem für eine Autobetonpumpe zur Begrenzung der Mastablagekraft.
Im Folgenden wird die Erfindung anhand der in der Zeichnung schematisch dargestellten Ausführungsbeispiele näher erläutert. Es zeigen:
- Fig. 1: eine Seitenansicht einer Autobetonpumpe in der Transportstellung des auf einem Mastbock abgelegten Betonverteilermasts,
- Fig. 2: ein Blockschaltbild einer nicht erfindungsgemäßen Schutzschaltung zur Begrenzung der Mastablagekraft auf dem Mastbock.

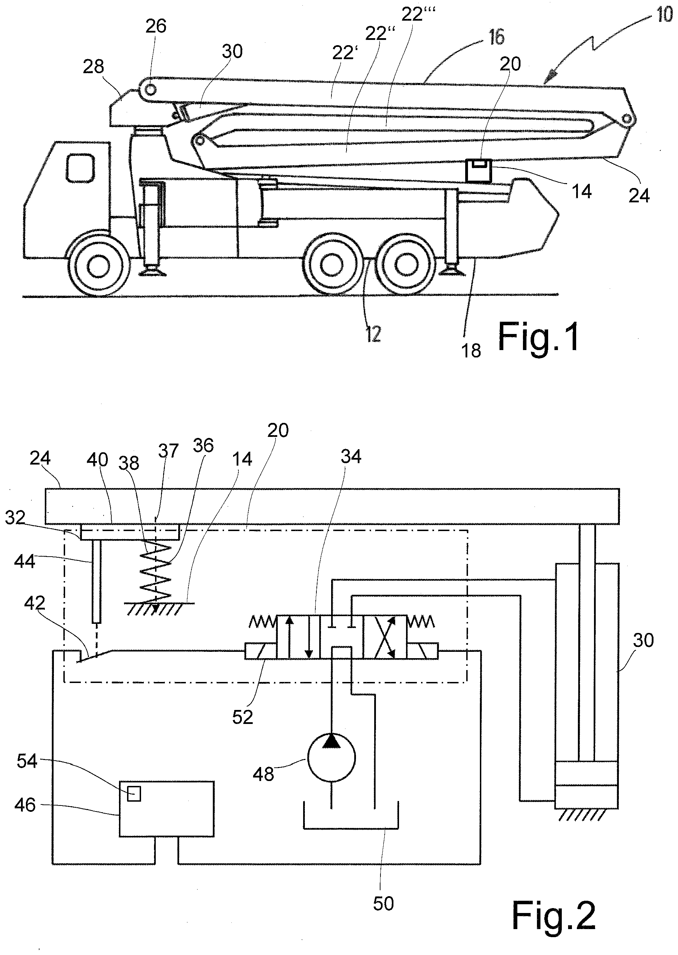

Die in Fig. 1 gezeigte Autobetonpumpe 10 umfasst ein Transportfahrzeug 12, einen darauf über eine Mastauflageeinheit bzw. einen Mastbock 14 abstützbaren Betonverteilermast 16 und ein Pumpaggregat 18 zum Fördern von Flüssigbeton zu einer fahrzeugfernen Betonierstelle über den entfalteten Betonverteilermast 16, wobei dessen Einfalt- bzw. Ablagebewegung in die gezeigte Transportstellung auf dem Mastbock 14 durch eine Schutzschaltung 20 bei Erreichen einer Ablagegrenzkraft automatisch beendet wird.

Der Betonverteilermast 16 umfasst mehrere relativ zueinander verschwenkbare Mastarme 22 (22',22",22'''), die als faltbares Armpaket 24 über ein Drehgelenk 26 am fahrzeugseitigen Ende des ersten Mastarms an einem Drehkopf 28 angelenkt sind. Der Drehkopf 28 ist um eine Hochachse drehbar auf dem Fahrzeug 12 gelagert, während das Drehgelenk 26 eine horizontale Drehachse besitzt. Um das Armpaket 24 um das Drehgelenk 26 zu verschwenken, ist ein erster Hydraulikzylinder 30 vorgesehen, der mit seinen Enden an Anlenkstellen des Drehkopfs 28 und des ersten Mastarms 22' angelenkt ist. Zum Entfalten der weiteren Mastarme sind nicht gezeigte weitere Hydraulikzylinder in an sich bekannter Weise an dem Betonverteilermast 16 angeordnet.

In der in Fig. 1 gezeigten Transport- bzw. Fahrstellung ist der erste Mastarm 22' horizontal ausgerichtet bzw. nur gering geneigt. Um bestimmte Betonieraufgaben im ausgefalteten Zustand zu ermöglichen, kann jedoch eine weitere Neigung erforderlich sein, so dass der Zylinderhub nicht auf die Transportstellung begrenzt werden kann. Daraus entsteht das Problem, dass das Armpaket 24 beim Ablegen auf dem Mastbock 14 über den Hydraulikzylinder 30 so stark nach unten gedrückt werden kann, dass das Fahrgestell bzw. der Aufbaurahmen, auf dem sich der Mastbock 14 abstützt, beschädigt wird. Um dies zu verhindern, wird durch die Schutzschaltung 20 die Vertikalkraft des Armpakets 24 auf den Mastbock 14 definiert begrenzt.
Wie in Fig. 2 mit vereinfachter Darstellung der Hydraulikschaltung veranschaulicht, umfasst die nicht erfindungsgemäße Schutzschaltung 20 eine die Last auf dem Mastbock 14 sensierende Schalteinheit 32 und ein mit dem ersten Hydraulikzylinder 30 gekoppeltes hydraulisches Stellglied in Form eines Wegeventils 34. Die Schalteinheit 32 weist ein beim Ablegen des Armpakets 24 elastisch verformbares Lastaufnahmeelement 36 auf. Dieses bildet einen Teil des Lastpfades 37 zur Ableitung des Gewichts des Armpakets 24 auf das Fahrzeug 12, wobei sichergestellt sein sollte, dass die Krafteinleitung eindeutig ist und das Armpaket 24 nur über das Lastaufnahmeelement 36 auf dem Mastbock 14 abgestützt ist.
Das Lastaufnahmeelement 36 bildet dabei einen Kraftsensor, über dessen Deformation bzw. elastische Verformung die auf den Mastbock 14 wirkende Vertikalkraft erfassbar ist. Zweckmäßig sollte die Grenzkraft nicht wesentlich größer als die Gewichtskraft des Armpakets 24 sein. Zu diesem Zweck kann das Lastaufnahmeelement 36 durch ein Tellerfederpaket 38 gebildet sein, welches auf eine maximale Federkraft von 10 bis 20 kN ausgelegt ist. Das Tellerfederpaket 38 kann in einem nicht gezeigten Federgehäuse auf dem Mastbock 14 integriert sein und über einen nach oben ragenden Stempel 40 eine Stützstelle für das Ablegen des Armpakets 24 bilden.

Die Schalteinheit 32 umfasst weiterhin einen Endschalter 42, der am Ende eines vorbestimmten Verformungs- bzw. Federwegs des Lastaufnahmeelements 36 auslöst und die Ablagebewegung stoppt. Zu diesem Zweck ist ein durch das Armpaket 24 in Verformungsrichtung des Lastaufnahmeelements 36 bewegbarer Schaltstößel 44 vorgesehen, der am Ende des vorbestimmten Verformungswegs als Tastorgan den elektrischen Endschalter 42 öffnet.

Das Stellglied 34 ermöglicht als 4/3-Wegeventil eine Ansteuerung des ersten Hydraulikzylinders 30 in zwei aktive Bewegungsrichtungen mittels einer Bedieneinheit 46. In der gezeigten federzentrierten Mittelstellung des Wegeventils 34 ist die Pumpe 48 auf den Tank 50 durchgeschaltet, und der Hydraulikzylinder 30 bleibt unter boden- und stangenseitigem Druck selbsthaltend vorgespannt. In der rechten Schaltstellung ist der Hydraulikzylinder 30 in Ausfahrrichtung beaufschlagt, um das Armpaket 24 anzuheben. In der linken Schaltstellung wird der Hydraulikzylinder 30 stangenseitig mit Drucköl versorgt, so dass das Armpaket 24 auf dem Mastbock 14 unter Schwerkraft abgelegt und gegebenenfalls noch zusätzlich hydraulisch angedrückt wird. Die Kraftbegrenzung erfolgt dann automatisch dadurch, dass der Endschalter 42 den elektromagnetischen Steueranschluss 52 von der Bedieneinheit 46 trennt. Zugleich kann dabei über eine Signaleinheit 54 ein optisches oder akustisches Signal für den Bediener abgegeben werden.

In einer abgewandelten Ausführungsform ist es auch möglich, ein gummielastisches Lastaufnahmeelement einzusetzen. Anstelle eines Endschalters kann ein Drucksensor eingesetzt werden. Alternativ kann das Lastaufnahmeelement über seinen elastischen Verformungsweg auch direkt auf ein Hydraulikventil wirken und die Ölzufuhr zum Hydraulikzylinder unterbrechen. Denkbar ist es für eine Schutzschaltung auch, einen direkten Kraftaufnehmer mit einem Schaltausgang zwischen Armpaket und Mastbock anzuordnen. Eine weitere Möglichkeit besteht in einer unmittelbaren Verformungsmessung am Armpaket oder Mastbock mittels Dehnungsmessstreifen. Alternativ ist es auch möglich, die Last des Armpakets mittelbar über boden- und stangenseitige Druckaufnehmer in dem Hydraulikzylinder zu bestimmen, wobei der Kontakt mit dem Mastbock zusätzlich über einen Schalter abgefragt wird.

## Patentansprüche

1. Autobetonpumpe mit einem Fahrzeug (12) und einem darauf angeordneten Betonverteilermast (16), welcher mehrere als Armpaket (24) auf einer fahrzeugfesten Mastauflageeinheit (14) ablegbare Mastarme (22) besitzt, und einer zum Ablegen und Entfalten des Armpakets (24) ausgebildeten Masthydraulik, welche mindestens einen das Armpaket (24) in einer Ablagebewegung gegen die Mastauflageeinheit (14) bewegenden Hydraulikzylinder (30) aufweist, **gekennzeichnet durch** eine mit dem Hydraulikzylinder (30) gekoppelte und die Ablagebewegung beendende Schutzschaltung (20), welche eine unter der Last des Armpakets (24) betätigbare Schalteinheit (32) umfasst, wobei die Schalteinheit (32) ein an der Mastauflageeinheit (14) angeordnetes, beim Ablegen des Armpakets (24) elastisch verformbares Lastaufnahmeelement (36) aufweist, und wobei das Armpaket (24) nur über das Lastaufnahmeelement (36) auf der Mastauflageeinheit (14) abgestützt ist.

2. Autobetonpumpe nach Anspruch 1, **dadurch gekennzeichnet, dass** das Lastaufnahmeelement (36) zur elastischen Aufnahme einer Kraft von mindestens 1 kN, vorzugsweise mehr als 10 kN ausgelegt ist.

3. Autobetonpumpe nach Anspruch 1 oder 2, **dadurch gekennzeichnet, dass** das Lastaufnahmeelement (36) eine durch das Armpaket (24) komprimierbare Federanordnung (38), insbesondere ein Tellerfederpaket aufweist.

4. Autobetonpumpe nach einem der Ansprüche 1 bis 3, **dadurch gekennzeichnet, dass** die Schalteinheit (32) einen am Ende der Ablagebewegung auslösenden Endschalter (42) aufweist, der die Ablagebewegung selbsttätig beendet.

5. Autobetonpumpe nach einem der Ansprüche 1 bis 4, **dadurch gekennzeichnet, dass** die Schutzschaltung (20) ein mit dem Hydraulikzylinder (30) verbundenes hydraulisches Stellglied (34) aufweist.

6. Autobetonpumpe nach Anspruch 5, **dadurch gekennzeichnet, dass** das Stellglied (34) ein Wegeventil ist.

7. Autobetonpumpe nach Anspruch 6, **dadurch gekennzeichnet, dass** der Endschalter (42) einen Steueranschluss des Wegeventils von einer Bedieneinrichtung (46) trennt.

8. Autobetonpumpe nach einem der Ansprüche 1 bis 7, **dadurch gekennzeichnet, dass** der Hydraulikzylinder (30) an einem ersten Mastarm (22') des Armpakets (24) angelenkt ist, und dass die Schutzschaltung (20) zum Beenden der Ablagebewegung die Druckölversorgung mindestens eines Hydraulikzylinders (30) des Armpakets (24) unterbricht.

9. Autobetonpumpe nach einem der Ansprüche 1 bis 8, **dadurch gekennzeichnet, dass** beim Ansprechen der Schutzschaltung (20) ein Signal für einen Bediener des Betonverteilermasts (16) abgegeben wird.

## Claims

1. A truck-mounted concrete pump having a vehicle (12) and a concrete distributor boom (16) that is arranged on said vehicle and comprises multiple boom arms (22) that can be stowed as an arm assembly (24) on a boom resting unit (14) that is fixed to the vehicle, and a boom hydraulics system that is embodied so as to stow and unfold the arm assembly (24), said boom hydraulics system comprising at least one hydraulic cylinder (30) that moves the arm assembly (24) in a stowing movement against the boom resting unit (14), **characterized by** a protective circuit (20) that is coupled to the hydraulic cylinder (30) and terminates the stowing movement, said protective circuit comprising a switching unit (32) that can be actuated under the load of the arm assembly (24), wherein the switching unit (32) comprises a load receiving element (36) that is arranged on the boom resting unit (14) and can be deformed in a resilient manner when stowing the arm assembly (24), and wherein the arm assembly (24) is only supported on the boom resting unit (14) by way of the load receiving element (36).

2. The truck-mounted concrete pump as claimed in claim 1, **characterized in that** the load receiving element (36) is designed so as to receive in a resilient manner a force of at least 1 kN, preferably more than 10 kN.

3. The truck-mounted concrete pump as claimed in claim 1 or 2, **characterized in that** the load receiving element (36) comprises a resilient element arrangement (38), in particular a disk spring assembly, that can be compressed by means of the arm assembly (24).

4. The truck-mounted concrete pump as claimed in any one of the claims 1 to 3, **characterized in that** the switching unit (32) comprises a limit switch (42) that triggers at the end of the stowing movement, said limit switch automatically terminating the stowing movement.

5. The truck-mounted concrete pump as claimed in any one of the claims 1 to 4, **characterized in that** the protective circuit (20) comprises a hydraulic adjusting member (34) that is connected to the hydraulic cylinder (30).

6. The truck-mounted concrete pump as claimed in claim 5, **characterized in that** the hydraulic adjusting member (34) is a directional control valve.

7. The truck-mounted concrete pump as claimed in claim 6, **characterized in that** the limit switch (42) disconnects a controller connector of the directional control valve from a control unit (46).

8. The truck-mounted concrete pump as claimed in any one of the claims 1 to 7, **characterized in that** the hydraulic cylinder (30) is jointed to a first boom arm (22') of the arm assembly (24), and that the protective circuit (20) interrupts the pressure oil supply at least of one hydraulic cylinder (30) of the arm assembly (24) so as to terminate the stowing movement.

9. The truck-mounted concrete pump as claimed in any one of the claims 1 to 8, **characterized in that** as the protective circuit (20) trips in a signal is output for an operator of the concrete distributor boom (16).

## Revendications

1. Pompe à béton automotrice avec un véhicule (12) et une flèche de distribution de béton (16) agencée au-dessus, qui possède plusieurs bras de flèche (22) pouvant être rangés sous forme de paquet de bras (24) sur une unité de stockage de flèche (14) intégrée au véhicule, et une hydraulique de flèche réalisée en vue du rangement et du déploiement du paquet de bras (24), qui présente au moins un vérin hydraulique (30) déplaçant le paquet de bras (24) contre l'unité de stockage de flèche lors d'un mouvement de rangement, **caractérisée par** un interrupteur de protection (20) couplé au vérin hydraulique (30) et achevant le mouvement de rangement, qui comprend une unité de commutation (32) pouvant être actionnée en vertu de la charge du paquet de bras (24), dans laquelle l'unité de commutation (32) présente un élément de réception de charge (36) pouvant être déformé de manière élastique lors du rangement du paquet de bras (24), agencé sur l'unité de stockage de flèche (14), et dans laquelle le paquet de bras (24) n'est soutenu sur l'unité de stockage de flèche (14) que par l'intermédiaire de l'élément de réception de charge (36).

2. Pompe à béton automotrice selon la revendication 1, **caractérisée en ce que** l'élément de réception de charge (36) est conçu pour une réception élastique d'une force d'au moins 1 kN, de manière préférée supérieure à 10 kN.

3. Pompe à béton automotrice selon la revendication 1 ou 2, **caractérisée en ce que** l'élément de réception de charge (36) présente un agencement de ressort (38) pouvant être comprimé par le paquet de bras (24), en particulier un bloc ressort à diaphragme.

4. Pompe à béton automotrice selon l'une quelconque des revendications 1 à 3, **caractérisée en ce que** l'unité de commutation (32) présente un commutateur fin de course (42) se déclenchant à la fin du mouvement de rangement, et qui met fin de manière automatique au mouvement de rangement.

5. Pompe à béton automotrice selon l'une quelconque des revendications 1 à 4, **caractérisée en ce que** l'interrupteur de protection (20) présente un organe de commande hydraulique (34) relié au vérin hydraulique (30).

6. Pompe à béton automotrice selon la revendication 5, **caractérisée en ce que** l'organe de commande (34) est une soupape à canaux.

7. Pompe à béton automotrice selon la revendication 6, **caractérisée en ce que** le commutateur fin de course (42) déconnecte une borne de commande de la soupape à canaux par rapport à un équipement de service (46).

8. Pompe à béton automotrice selon l'une quelconque des revendications 1 à 7, **caractérisée en ce que** le vérin hydraulique (30) est articulé au niveau d'un premier bras de flèche (22') du paquet de bras (24), et le commutateur de protection (20) interrompt l'alimentation en huile sous pression d'au moins un vérin hydraulique (30) du paquet de bras (24) en vue de l'arrêt du mouvement de rangement.

9. Pompe à béton automotrice selon l'une quelconque des revendications 1 à 8, **caractérisée en ce qu'**un signal destiné à un utilisateur de la flèche distributrice de béton (16) est émis lors du fonctionnement du commutateur de protection (20).
